# EUROPEAN PATENT APPLICATION

(11) **EP 1 995 496 A1**
(43) Date of publication of application: **26.11.2008**
(21) Application number: 07425301.4
(22) Date of filing: 21.05.2007
(51) Int. Cl.: F16H 59/12, F16H 61/12

(54) **Push-button control system for a servo mechanical gear-change**

(71) Applicant: MAGNETI MARELLI POWERTRAIN S.p.A., 20011 Corbetta (IT)
(72) Inventor: Lubrano Luigi, 28100 Novara (IT)
(74) Representative: Jorio, Paolo

(57) **Abstract**

A control system for a servo mechanical gear-change; the control system (2) is provided with: an electronic control unit (3) for controlling the servo manual gear-change; and a user interface (4) for communicating to the electronic control unit (3) the type of motion desired, which can be selected from among "drive", "reverse", and "neutral"; the user interface (4) has three push-buttons (7) for selecting the type of motion, each of which, when pressed, determines the selection of a respective type of motion, and a common supporting plate (6), which supports the three push-buttons (7) for selecting the type of motion.

## Description

The present invention relates to a push-button control system for a servo mechanical gear-change.

There is an increasing diffusion of servo gear-changes that are structurally similar to a manual gear-change of a traditional type except for the fact that the clutch pedal and the gear lever actuated by the driver are replaced by corresponding electrical or hydraulic servo controls.

To an electronic control unit for controlling a servo manual gear-change the driver must necessarily communicate the type of motion desired, i.e., forwards (type of motion normally defined as "drive"), backwards (type of motion normally defined as "reverse"), or else "neutral". Furthermore, to the electronic control unit for controlling the servo manual gear-change the driver could communicate whether he wants the mode of manual operation, in which a request for gear-change is generated directly by the driver, or else whether he wants the mode of automatic operation, in which a request for gear-change is generated by a control program independently of the action of the driver. Finally, to the electronic control unit for controlling the servo manual gear-change the driver could communicate the calibration/mapping desired, i.e., whether the electronic control unit for controlling the servo manual gear-change is to operate for favouring the saving of fuel (calibration/mapping normally defined as "economy" mode), for favouring performance (calibration/mapping normally defined as "sport"), for favouring the engine brake (calibration/mapping normally defined as "downhill"), or else for favouring traction on road surfaces with low adherence (calibration/mapping normally defined as "ice") .

In motor vehicles currently available on the market, the electronic control unit for controlling the servo manual gear-change is provided with a user interface, which is normally set in the tunnel of the compartment alongside the driver and comprises a (joystick) that can be set in different positions for indicating the type of motion desired. However, said joystick is costly, cumbersome, and for some drivers far from intuitive.

Furthermore, user interfaces currently available on the market require adaptations to the tunnel of the compartment that not are absolutely compatible with the specifications of installation of a control lever for a traditional manually controlled mechanical gear-change. Consequently, it is costly and complex to propose in one and the same vehicle to install alternatively a traditional manually controlled mechanical gear-change or else a servo mechanical gear-change.

Some examples of control systems for a servo mechanical gear-change are described in the patent applications Nos. EP0731292A1, EP0731293A1, EP0620385A1 and EP0615078A1.

The aim of the present invention is to provide a push-button control system for a servo mechanical gear-change, the control system of which will be free from the drawbacks described above and, in particular, will be easy and economically advantageous to produce, as well as being very compact.

According to the present invention a push-button control system for a servo mechanical gear-change is provided according to what is claimed in the accompanying claims.

The present invention will now be described with reference to the annexed plate of drawings, which illustrate a non-limiting example of embodiment thereof, in which:
- Figure 1 is a schematic view of the dashboard of a motor vehicle provided with a servo mechanical gear-change controlled by a push-button control system built in accordance with the present invention;
- Figure 2 is a plan view of a push-button panel of the push-button control system; and
- Figure 3 is an electrical diagram of the push-button control system.

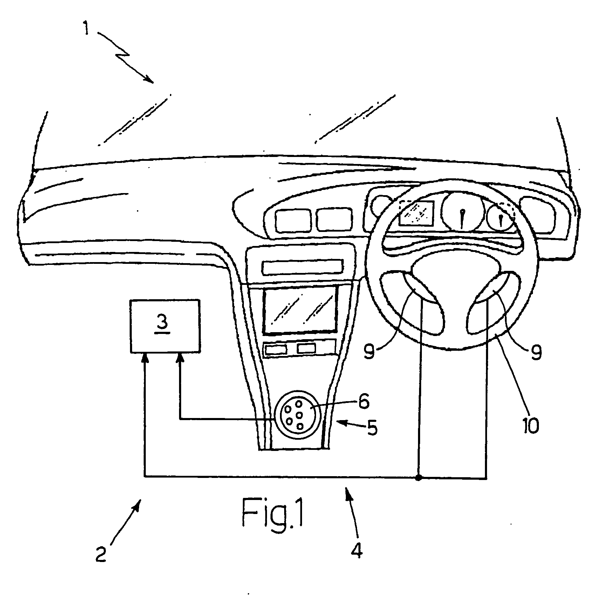

In Figure 1, the number 1 designates as a whole the dashboard of a motor vehicle provided with a servo mechanical gear-change controlled by a control system 2.

The control system 2 comprises an electronic control unit 3, which is normally set in the engine compartment in the proximity of the gear-change and is designed to drive the servo controls of the gear-change, and a user interface 4, which is integrated in the dashboard 1 and is designed to be used by the driver to enable the driver to communicate his own choices to the electronic control unit 3. The user interface 4 comprises a push-button panel 5, which is normally set on the tunnel in the position normally occupied by the control lever for a conventional mechanical manual gear-change.

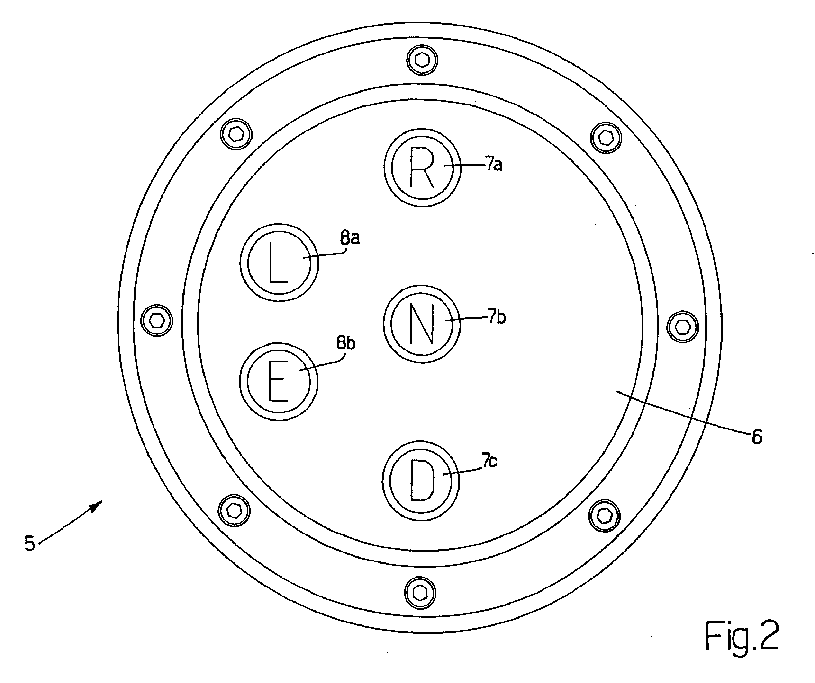

According to what is illustrated in Figure 2, the push-button panel 5 comprises a common supporting plate 6 having a circular plane shape and supports three push-buttons 7 for selecting the type of motion, each of which, when pressed, determines the selection of a respective type of motion, and two push-buttons 8 for selecting the calibration, each of which, when pressed, determines the selection of a respective calibration. The three push-buttons 7 for selecting the type of motion are set centrally and are aligned along a diameter of the supporting plate 6, whilst the two push-buttons 8 for selecting the calibration are set laterally and are aligned parallel to the three push-buttons 7 for selecting the type of motion.

The push-button 7a for selecting the type of motion (distinguished by the letter "R") enables selection of the reverse gear (type of motion normally defined as "reverse"), the push-button 7b for selecting the type of motion (distinguished by the letter "N") enables selection of the "neutral" gear, and the push-button 7c for selecting the type of motion (distinguished by the letter "D") enables selection of the forward gear (type of motion normally defined as "drive"). The type of motion selected by the push-button ("drive" - letter "D") is recommended also for parking the motor vehicle 1, in so far as it is good practice to park the motor vehicle 1 with a gear engaged for using also the engine brake for keeping the motor vehicle 1 stationary.

The push-button 8a for selecting the calibration (distinguished by the letter "L") enables selection of the automatic calibration (i.e., in which the variation of the gear is decided autonomously by the electronic control unit 3), which privileges the engine brake, and the push-button 8b for selecting the calibration (distinguished by the letter "E") enables selection of the automatic calibration that privileges the saving of fuel.

According to a different embodiment (not illustrated), the push-button panel 5 comprises a further push-button for selecting the "calibration" mode (normally distinguished by the letter "S"), which enables selection of the calibration that privileges the performance for example, minimizing the gear-changing times (also in the case of manual-operation mode). According to a different embodiment (not illustrated), the push-button panel 5 comprises a further push-button for selecting the calibration (normally distinguished by the letter "I"), which enables selection of the calibration that privileges traction on road surfaces with low adherence (icy or very wet roads) for example, using a specific control strategy for re-disengagement of the clutch during pickup and using specific gear-change maps.

According to the embodiment illustrated in Figure 1, the user interface 4 comprises a pair of control devices 9 (for example, of the type of the ones described in the patent application No. EP1180618A1), which are mounted on the opposite sides of a steering column 10 and can be actuated by the driver for communicating to the electronic control unit 3 a request for respectively ascending or descending gear-change. When the driver acts on a control device 9, the electronic control unit 3 selects the "drive" gear and a mode of manual operation, in which the variation of the gear is decided by the driver (i.e., a request for gear-change is generated directly by the driver) through the control devices 9. Instead, when the driver presses the push-button 7c ("drive" - letter "D"), the electronic control unit 3 selects the "drive" gear and a mode of automatic operation, in which change of the gear is decided autonomously by the electronic control unit 3 (i.e., a request for gear-change is generated by a control program independently of the action of the driver).

According to a different embodiment (not illustrated), the user interface 4 is without the control devices 9 and the electronic control unit 3 enables only the mode of automatic operation.

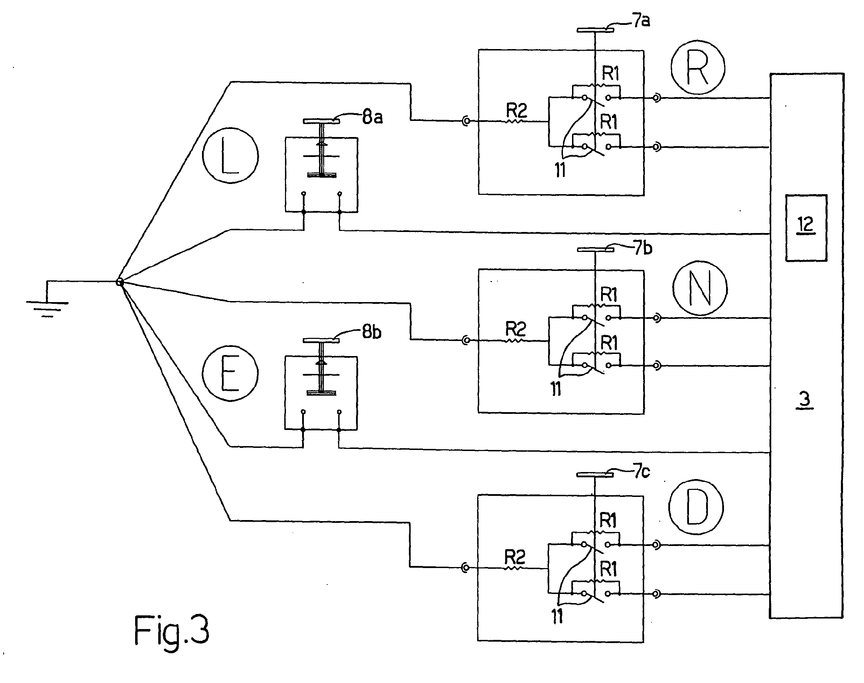

According to what is illustrated in Figure 3, each push-button 7 for selecting the type of motion is mechanically connected to two mutually redundant electrical switches 11, connected to one another in parallel, and connected separately to the electronic control unit 3. Normally, the two electrical switches 11 mechanically connected to one and the same push-button 7 for selecting the type of motion are both either normally open or normally closed; alternatively, the two electrical switches 11 mechanically connected to one and the same push-button 7 for selecting the type of motion are one normally open and the other normally closed.

If the electronic control unit 3 detects the change of state of just one electrical switch 11 of the two electrical switches 11 mechanically connected to one and the same push-button 7 for selecting the type of motion, then the electronic control unit 3 identifies a malfunctioning in the push-button 7 for selecting the type of motion. Furthermore, if the electronic control unit 3 detects that a push-button 7 for selecting the type of motion is kept depressed uninterruptedly for a time longer than a threshold of time of sticking (for example, 30 seconds) then the electronic control unit 3 identifies a malfunctioning of the push-button 7 for selecting the type of motion due to sticking. In the case of malfunctioning of a push-button 7 for selecting the type of motion, the electronic control unit 3 operates in recovery mode, degrading the performance of the motor vehicle (for example, limiting the maximum r.p.m. of the engine, limiting the maximum speed that can be reached by the motor vehicle, and/or limiting the highest gear that can be activated). The purpose of the recovery mode is to degrade the performance of the motor vehicle to force the driver to see to repairing the fault in a short time, in any case enabling in the meantime the motor vehicle to proceed.

According to a preferred embodiment, connected in parallel to the two electrical switches 11 mechanically connected to one and the same push-button 7 for selecting the type of motion are two electrical resistors R1 having one and the same value of resistance (for example, 3.9 kΩ). Furthermore, connected in series to the two electrical switches 11 mechanically connected to one and the same push-button 7 for selecting the type of motion is an electrical resistor R2 having normally a value of resistance (for example, 1.0 kΩ) different from that of the electrical resistors R1. The electronic control unit 3 measures cyclically the voltage present between the terminal associated to each switch 11 and the electrical ground for determining a possible short-circuit or a possible detachment of the switch 11 itself. In other words, the electronic control unit 3 comprises a device 12 for measuring the voltage, which is used for measuring the voltage present between the terminal associated to each switch 11 and the electrical ground for determining a possible short-circuit or a possible detachment of the switch 11 itself. Thanks to the presence of the two electrical resistors R1 the voltage read between the terminal associated to each switch 11, and the electrical ground switches between a first value V1 (respective push-button 7 for selecting the type of motion not pressed) and a second value V2 (respective push-button 7 for selecting the type of motion pressed). The first voltage value V1 is greater than zero and smaller than the second voltage value V2, whilst the second voltage value V2 is higher than the first voltage value V1 and smaller than the supply voltage normally equal to 5 V.

Thanks to the two electrical resistors R1 it is possible to identify, with certainty, a short-circuit of a terminal of a switch 11 with the electrical ground (in this case, the voltage of the terminal with respect to the electrical ground is zero) and a disconnection of a switch 11 (in this case, the voltage of the respective terminal with respect to the electrical ground is equal to the supply voltage, which is normally 5 V).

The control system 1 described above presents numerous advantages, in so far as its user interface 4 is simple, inexpensive and compact. Furthermore, the push-button panel 5 can be mounted on the tunnel of a vehicle by closing the through hole normally occupied by the control lever for a traditional manually controlled mechanical gear-change. In this way, said user interface 4 renders extremely technically simple and aesthetically pleasant to propose the possibility of installing a traditional manually controlled mechanical gear-change or else a servo mechanical gear-change on one and the same vehicle. Finally, the use of the user interface 4 is particularly simple and intuitive and does not require any kind of training of the driver.

## Claims

1. A control system for a servo mechanical gear-change; the control system (2) comprises:
an electronic control unit (3) for controlling the servo manual gear-change; and
a user interface (4), for communicating to the electronic control unit (3) the type of motion desired, which can be selected from among "drive" (forward movement), "reverse", and "neutral";
the control system (2) is **characterized in that** the user interface (4) comprises:
three push-buttons (7) for selecting the type of motion, each of which, when pressed, determines the selection of a respective type of motion; and
a common supporting plate (6), which supports the three push-buttons (7) for selecting the type of motion.

2. The control system (2) according to Claim 1, wherein the supporting plate (6) has a circular shape.

3. The control system (2) according to Claim 1 or Claim 2, wherein each push-button (7) for selecting the type of motion is mechanically connected to two mutually redundant electrical switches (11) connected separately to the electronic control unit (3).

4. The control system (2) according to Claim 3, wherein the two electrical switches (11) mechanically connected to one and the same push-button (7) for selecting the type of motion are both either normally open or normally closed.

5. The control system (2) according to Claim 3, wherein the two electrical switches (11) mechanically connected to one and the same push-button (7) for selecting the type of motion are one normally open and the other normally closed.

6. The control system (2) according to Claim 3, Claim 4 or Claim 5, wherein, if the electronic control unit (3) detects the change of state of just one electrical switch (11) of the two electrical switches (11), mechanically connected to one and the same push-button (7) for selecting the type of motion, then the electronic control unit (3) identifies a malfunctioning in the push-button (7) for selecting the type of motion.

7. The control system (2) according to any one of Claims 3 to 6, wherein connected in parallel to the two electrical switches (11), mechanically connected to one and the same push-button (7) for selecting the type of motion, are two first electrical resistors (R1) having one and the same value of resistance.

8. The control system (2) according to Claim 7, wherein connected in series to the two electrical switches (11), mechanically connected to one and the same push-button (7) for selecting the type of motion, is a second electrical resistor (R2).

9. The control system (2) according to Claim 7 or Claim 8, wherein the electronic control unit (3) comprises a device (12) for measuring the voltage present between the terminal of each electrical switch (11) and the electrical ground for determining a possible short-circuit or a possible detachment of the electrical switch (11) itself.

10. The control system (2) according to any one of Claims 1 to 9, wherein, if the electronic control unit (3) detects that a push-button (7) for selecting the type of motion is kept depressed uninterruptedly for a time longer than a threshold of time of sticking, then the electronic control unit (3) identifies a malfunctioning, due to sticking, of the push-button (7) for selecting the type of motion.

11. The control system (2) according to any one of Claims 1 to 10, wherein in the case of malfunctioning of a push-button (7) for selecting the type of motion, the electronic control unit (3) operates in recovery mode, degrading the performance of the vehicle.

12. The control system (2) according to any one of Claims 1 to 11, wherein, when pressed, a first push-button (7c) for selecting the type of motion associated to "drive" (i.e., forward movement) there is also selected a mode of automatic operation, in which a request for gear-change is generated by a control program independently of the action of the driver.

13. The control system (2) according to any one of Claims 1 to 12, wherein the user interface (4) comprises a pair of control devices (9), which are mounted on the opposite sides of a steering column (10) and can be actuated by the driver for communicating to the electronic control unit (3) a request for ascending and descending gear-change, respectively.

14. The control system (2) according to Claim 13, wherein, when a control device (9) is pressed, there is also selected a mode of manual operation, in which a request for gear-change is generated directly by the driver.

15. The control system (2) according to any one of Claims 1 to 14, wherein the user interface (4) comprises at least one push-button (8) for selecting the calibration provided on the supporting plate (6) and for communicating to the electronic control unit (3) the desired type of calibration.

16. The control system (2) according to any one of Claims 1 to 14, wherein the user interface (4) comprises two push-buttons (8) for selecting the calibration provided on the supporting plate (6) and for communicating the desired type of calibration to the electronic control unit (3).
